# DEMANDE DE BREVET EUROPEEN

(11) **EP 2 871 444 A1**
(43) Date de publication de la demande: **13.05.2015**
(21) Numéro de dépôt: 14188889.1
(22) Date de dépôt: 14.10.2014
(51) Int. Cl.: G01B 21/04

(54) **Système de verification pour machine de mesure**

(30) Priorité: 08.11.2013 FR 1360978
(71) Demandeur: PEUGEOT CITROËN AUTOMOBILES SA, 78140 Velizy-Villacoublay (FR)
(72) Inventeur: Welsch, Pascal, 57220 VARIZE (FR)

(57) **Abrégé**

Système **(1)** de contrôle d'une machine **(2)** de mesure équipée d'un palpeur **(4)** mécanique, ce système comprenant un corps **(5),** un premier étalon et un deuxième étalon montés sur le corps **(5)** et distincts l'un de l'autre, dans lequel le premier étalon comprend une surface plane non rugueuse pour le contrôle de la rectitude et du taux de vibration mesurés par la machine **(2)** de mesure, et le deuxième étalon comprend un état de surface à motifs réguliers pour permettre le contrôle de la justesse ainsi que de la vitesse de la mesure de la machine **(2).**

## Description

L'invention a trait au domaine de la métrologie, et plus précisément au contrôle de la conformité des mesures effectuées par les machines de mesure.

Lors de la production de pièces usinées, des contrôles de qualité sont réalisés, sur les pièces terminées ou entre deux opérations de fabrication, afin de vérifier le respect des cotes et tolérances de fabrication. Ces contrôles peuvent être de deux sortes : les contrôles manuels, effectués à l'aide d'outils de mesures comme le pied à coulisse, qui permet d'effectuer des mesures relativement grossières (à 1/100e de millimètre près), et le contrôle assisté ou automatisé, à l'aide de machines de mesure qui permettent d'effectuer des mesures de manière beaucoup plus précise (inférieures au micromètre).

Tout dispositif de mesure, qu'il s'agisse d'un instrument manuel ou d'une machine automatisée, doit régulièrement être contrôlé afin de vérifier son bon fonctionnement et la pertinence de ses mesures.

De plus, dans les ateliers de production, les machines-outils utilisées pour la production des pièces engendrent des vibrations qui peuvent dérégler les machines de mesure ou fausser les résultats lors d'une opération de mesure. Il est alors important de régler ces machines de mesure et de connaître les conditions dans lesquelles celles-ci sont amenées à être utilisées.

Le contrôle se fait, de manière générale, par la mesure d'au moins une pièce étalon, dont les dimensions exactes sont connues, puis par comparaison de la (ou des) mesure(s) obtenue(s) avec la (ou les) dimension(s) exacte(s) telles que précisées dans un cahier des charges. Une fois la comparaison effectuée, la machine de mesure peut être décrétée propre à l'utilisation si la comparaison ne révèle pas d'écart entre la (ou les) mesure(s) et la (ou les) dimension(s) exacte(s), ou non conforme, afin d'être étalonnée (autrement dit réglée), si la comparaison révèle un écart entre la (ou les) mesure(s) et la (ou les) dimension(s) exacte(s).

On connaît du document FR 2 930 818 un procédé de détermination de la précision d'un capteur de mesure de forme à l'aide d'un étalon comportant des conformations ayant des dimensions de valeurs calibrées, ce procédé comprenant une étape de mesure des conformations à l'aide du capteur, une comparaison des valeurs obtenues par mesure avec les valeurs calibrées et une détermination de la précision du capteur à partir de la comparaison précédemment effectuée.

Ce procédé donne satisfaction ; cependant il ne permet pas de contrôler le bon fonctionnement du capteur mais seulement de déterminer sa précision. Or tout dysfonctionnement dans le capteur de machine de mesure entraîne un défaut de fiabilité du contrôle des pièces ; il en résulte au mieux des retards de production (à supposer que l'erreur soit détectée) ou, pire, la production de pièces défectueuses en dépit des contrôles positifs, avec des conséquences négatives sur le service après-vente.

Un premier objectif est de proposer un système de contrôle pour une machine de mesure, permettant de contrôler de manière simple et rapide le bon fonctionnement de celle-ci.

Un deuxième objectif est de proposer un système de contrôle permettant de s'affranchir de l'environnement de la machine de mesure, et notamment les vibrations présentes dans l'atelier.

A cet effet, il est proposé en premier lieu un système de contrôle d'une machine de mesure équipée d'un palpeur mécanique, ce système comprenant un corps, un premier étalon et un deuxième étalon montés sur le corps et distincts l'un de l'autre, dans lequel le premier étalon comprend une surface plane non rugueuse pour le contrôle de la rectitude et du taux de vibration mesurés par la machine de mesure, et le deuxième étalon comprend un état de surface à motifs réguliers, notamment pour permettre le contrôle de la justesse ainsi que de la vitesse de la mesure de la machine.

La présence sur le corps de deux étalons ayant des états de surface différents permet de contrôler différents paramètres de mesure d'une machine de mesure. Ainsi, il n'est pas nécessaire d'avoir recours à plusieurs systèmes de contrôle différents, ce qui permet à l'opérateur de gagner du temps.

Diverses caractéristiques supplémentaires peuvent être prévues, seules ou en combinaison :
- le deuxième étalon présente une série de motifs équidistantes définissant des crêtes séparées deux à deux d'une distance prédéterminée et présentant une hauteur moyenne prédéterminée;
- le premier étalon et le deuxième étalon sont montés chacun sur un support amovible par rapport au corps ;
- les supports sont superposés ;
- le premier étalon est situé au-dessus du deuxième étalon ;
- le corps se présente sous la forme d'un fût cylindrique.

Il est proposé en second lieu un procédé de contrôle d'une machine de mesure équipée d'un palpeur mécanique, dans lequel le procédé comprend les étapes consistant à :
- effectuer des mesures sur un premier étalon comprenant une surface plane non rugueuse pour le contrôle de la rectitude et du taux de vibration mesurés par la machine, et sur un deuxième étalon comprenant un état de surface à motifs réguliers pour permettre le contrôle de la justesse ainsi que de la vitesse de mesure de la machine ;
- intégrer le résultat de ces mesures dans un programme d'ordinateur ;
- comparer les mesures avec des valeurs seuils.

Diverses caractéristiques supplémentaires peuvent être prévues, seules ou en combinaison :
- ce procédé comprend une opération de mesure de la distance entre deux crêtes successives du deuxième étalon ;
- ce procédé comprend une opération de détermination de la hauteur moyenne des motifs réguliers ;
- les mesures sont réalisées selon une génératrice d'un même corps sur lequel sont montés les deux étalons.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique représentant un système de contrôle de précision d'une machine de mesure ;
- la figure 2 est une vue en coupe selon l'axe II-II de la figure 1.

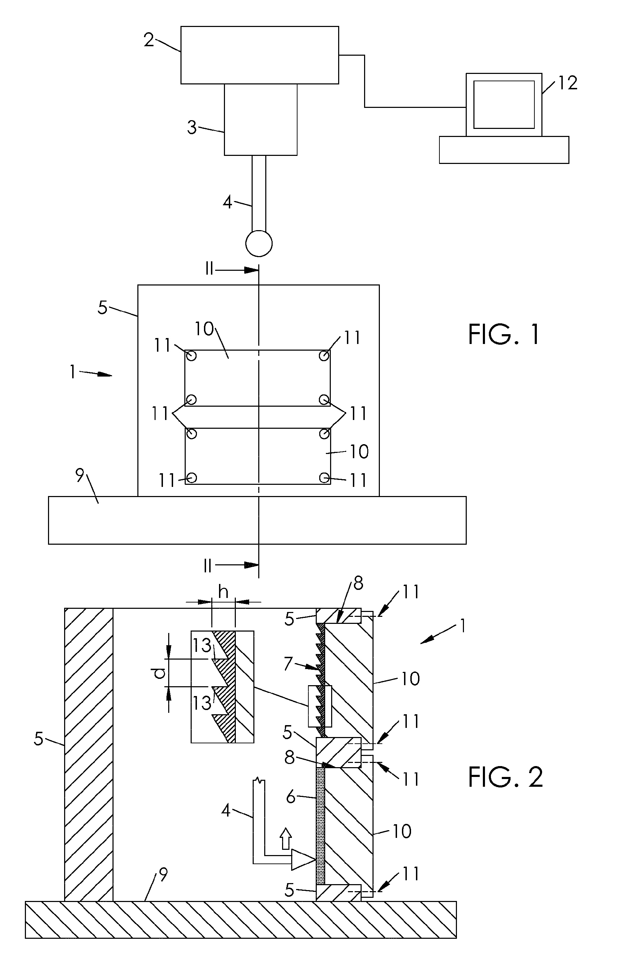

Sur la figure 1 est schématiquement représenté un système 1 de contrôle d'une machine 2 de mesure équipée d'une tête 3 de mesure et d'un palpeur 4 équipé d'un stylet diamant monté sur la tête 3 de mesure. Le système 1 de contrôle comprend un corps 5 formant support, un premier étalon **6** et un deuxième étalon **7** distincts, montés tous deux sur le corps **5.**

Le corps **5** se présente sous la forme d'un fût cylindrique sensiblement vertical et ouvert à une extrémité supérieure pour permettre l'introduction de la tête **3** de mesure. Dans une partie inférieure, le corps 5 présente deux ouvertures **8** radiales dans chacune desquelles vient se loger l'un des étalons **6, 7.**

Selon un mode de réalisation représenté sur les figures, le corps **5** est solidaire d'un marbre **9.** En variante, le corps 5 pourrait être indépendant, par exemple pour faciliter son transport d'un poste de mesure à un autre. Le corps **5** est déplaçable (le cas échéant avec son marbre **9) ;** il peut ainsi être monté sur un châssis de la machine **2** de mesure. Celle-ci pouvant être isolée de l'environnement extérieur, par exemple au moyen d'un dispositif amortisseur interposé entre le châssis et le sol sur lequel repose le châssis, il en résulte que le système **1** et la machine **2** sont conjointement isolés de l'environnement.

Les étalons **6, 7** présentent des états de surface différents, afin de contrôler des paramètres précis de la machine **2** de mesure. Comme on le voit sur la figure 2, qui illustre schématiquement les états de surface des étalons **6, 7,** le premier étalon **6** présente une surface plane permettant de contrôler la rectitude et le taux de vibration mesurés par la machine **2** de mesure, tandis que le deuxième étalon **7** présente un état de surface à motifs réguliers permettant de contrôler la précision et la vitesse de mesure de la machine **2** de mesure. Les états de surface des deux étalons **6, 7** sont supposés connus et considérés comme exempts de défaut.

Comme on le voit sur les figures, les étalons **6, 7** sont chacun montés sur un support **10,** montés amovibles sur le corps **5** au moyen d'éléments **11** de fixation amovible (par exemple des vis).

On comprend donc qu'il est possible de séparer les étalons **6, 7** du corps **5,** par exemple pour les remplacer lorsqu'ils sont usés.

Comme on le voit sur les figures, les étalons **6, 7** sont superposés. Cette superposition permet, comme cela est exposé ci-après, de faciliter le contrôle et de le rendre plus rapide. Avantageusement, le premier étalon **6** est placé au-dessous du deuxième étalon **7.**

Pour procéder au contrôle de la machine **2** de mesure, on procède comme suit.

On commence par positionner le système **1** de contrôle sous la tête **3** de mesure de la machine **2** de mesure, puis on descend la tête **3** de mesure à l'intérieur du corps **5** du système 1. Lorsque la tête 3 est positionnée, on met en marche un programme d'ordinateur depuis un ordinateur **12** relié à la machine de mesure afin de commencer un cycle de mesures du système **1** de contrôle.

Piloté par le programme d'ordinateur, le palpeur **4** effectue un balayage de l'intérieur du corps **5** selon une génératrice (ou selon l'axe) de celui-ci depuis le bas vers le haut. Plus précisément, selon un mode de réalisation, le palpeur **4** balaye le premier étalon **6** de bas en haut, puis le deuxième étalon **7,** également de bas en haut. En d'autres termes, le système **1** est programmé pour effectuer un contrôle de rectitude en priorité. Quoi qu'il en soit, le balayage peut être continu (c'est-à-dire que les deux étalons **6, 7** sont balayés successivement), ou séquentiel, c'est-à-dire que le système peut effectuer une pause (notamment pour temporiser pendant les calculs) entre le balayage du premier étalon **6** et le balayage du deuxième étalon **7.** Le balayage de chaque étalon **6, 7** peut d'ailleurs être répété plusieurs fois. Lors du cycle de mesures, l'ordinateur **12** affiche des graphiques en temps réel afin que l'opérateur puisse suivre l'avancée du cycle et puisse émettre un premier avis sur la conformité de la machine **2.**

Selon un mode de réalisation illustré dans le médaillon de détail de la figure 2, la surface à motifs réguliers du deuxième étalon **7** présente une succession de nervures équidistantes définissant des crêtes **13** séparées deux à deux d'une distance **d.** Dans ce cas le palpeur **4** permet d'effectuer un relevé de la distance moyenne entre les crêtes **13.** De plus, le palpeur **4** permet d'évaluer la hauteur **h** moyenne des motifs réguliers.

Lorsque le cycle de mesures est terminé, l'ordinateur **12** intègre les résultats des mesures et les compare avec des valeurs théoriques prédéterminées, ces valeurs théoriques comprenant des valeurs seuil définissant un intervalle de tolérance dans lequel les mesures sont décrétées convenables. En particulier, le programme inclut la comparaison de la distance d'inter-crêtes avec une valeur prédéterminée ainsi qu'une comparaison de la hauteur **h** moyenne des motifs réguliers. A l'issue de la comparaison, l'opérateur est en mesure de déterminer si la machine **2** de mesure est apte à être utilisée pour la vérification de pièces en atelier ou si la machine **2** de mesure est impropre à une utilisation pour le contrôle de conformité de pièces produites.

Le système et le procédé de contrôle d'une machine **2** de mesure, tels qu'ils viennent d'être décrits, procurent plusieurs avantages:
- ils permettent de contrôler le bon fonctionnement d'une machine **2** de mesure;
- ils permettent de contrôler différents paramètres de mesure;
- ils permettent de s'affranchir des conditions de travail de la machine **2** de mesure;
- ils permettent un contrôle simple et rapide de la machine **2** de mesure.

Le bon fonctionnement d'une machine **2** de mesure peut être contrôlé grâce au palpeur **4** qui vient mesurer les étalons **6, 7** du système de contrôle. Ainsi, la comparaison des mesures des étalons **6, 7** avec les valeurs théoriques programmées permet de vérifier le bon fonctionnement du palpeur **4** et de l'ensemble de la chaîne de mesure.

De plus, il est possible de contrôler différents paramètres de la machine **2** de mesure, notamment sa précision de mesure, sa vitesse de mesure ou encore la rectitude de la mesure. La précision garantit, en validant la justesse des mesures, la conformité des pièces produites. En particulier, le contrôle de la vitesse permet de valider la justesse de certains paramètres qui sont influencés par la distance relevée entre deux sommets. Le contrôle de la rectitude garantit l'absence de défauts de rectitude inhérents à la machine **2,** qui pourraient avoir une influence sur les résultats de mesure.

En outre le système **1** de contrôle et son procédé permettent de s'affranchir des vibrations dans l'environnement de la machine **2** de mesure, en montant le système **1** de contrôle directement sur le châssis de la machine **2** de mesure. Dès lors, les vibrations en provenance de l'environnement de la machine **2** ne sont pas transmises au système **1** (ou sont suffisamment amorties).

Enfin, le contrôle de la machine **2** de mesure est simple et rapide puisque les étalons **6, 7** sont voisins l'un de l'autre, ce qui permet de procéder à la mesure des étalons **6, 7** dans la foulée. De même, la procédure de contrôle est assez simple puisqu'il suffit à l'opérateur de positionner le corps **5** à l'aplomb du palpeur **4** et de démarrer le programme depuis l'ordinateur **12.**

## Revendications

1. Système **(1)** de contrôle d'une machine **(2)** de mesure équipée d'un palpeur **(4)** mécanique, ce système comprenant un corps **(5),** un premier étalon **(6)** et un deuxième étalon **(7)** montés sur le corps **(5)** et distincts l'un de l'autre, **caractérisé en ce que** le premier étalon **(6)** comprend une surface plane non rugueuse pour le contrôle de la rectitude et du taux de vibration mesurés par la machine **(2)** de mesure, et le deuxième étalon **(7)** comprend un état de surface à motifs réguliers pour permettre le contrôle de la justesse ainsi que de la vitesse de la mesure de la machine **(2).**

2. Système **(1)** selon la revendication 1 **caractérisé en ce que** le deuxième étalon **(7)** présente une série de motifs réguliers équidistants définissant des crêtes **(13)** séparées deux à deux d'une distance prédéterminée et présentant une hauteur **(h)** moyenne prédéterminée.

3. Système **(1)** selon l'une quelconque des revendications précédentes **caractérisé en ce que** le premier étalon **(6)** et le deuxième étalon **(7)** sont montés chacun sur un support **(10)** amovible par rapport au corps **(5).**

4. Système **(1)** selon la revendication 3 **caractérisé en ce que** les supports **(10)** sont superposés.

5. Système **(1)** selon l'une quelconque des revendications 1 à 4 **caractérisé en ce que** le premier étalon **(6)** est situé au-dessous du deuxième étalon **(7).**

6. Système **(1)** selon l'une quelconque des revendications précédentes **caractérisé en ce que** le corps **(5)** se présente sous la forme d'un fût cylindrique.

7. Procédé de contrôle d'une machine **(2)** de mesure équipée d'un palpeur **(4)** mécanique, **caractérisé en ce que** le procédé comprend les étapes consistant à :
- effectuer des mesures sur un premier étalon **(6)** comprenant une surface plane non rugueuse pour le contrôle de la rectitude et du taux de vibration mesurés par la machine **(2),** et sur un deuxième étalon **(7)** comprenant un état de surface à motifs réguliers pour permettre le contrôle de la justesse ainsi que de la vitesse de mesure de la machine **(2);**
- intégrer le résultat de ces mesures dans un programme d'ordinateur ;
- comparer les mesures avec des valeurs seuils.

8. Procédé selon la revendication 7 **caractérisé en ce que** ce procédé comprend une opération de mesure de la distance entre deux crêtes **(13)** successives du deuxième étalon **(7).**

9. Procédé selon la revendication 7 ou la revendication 8, **caractérisé en ce qu'**il comprend une opération de détermination de la hauteur **(h)** moyenne des motifs réguliers.

10. Procédé selon l'une quelconque des revendications 7 à 9, **caractérisé en ce que** les mesures sont réalisées selon une génératrice d'un même corps **(5)** sur lequel sont montés les deux étalons **(6, 7).**
